# EUROPEAN PATENT SPECIFICATION

(11) **EP 4 135 473 B1**
(45) Date of publication and mention of the grant of the patent: **08.07.2026**
(21) Application number: 21190959.3
(22) Date of filing: 12.08.2021
(51) Int. Cl.: H04W 76/40, H04W 76/28

(54) **A DOWNLINK MULTICAST SERVICE TRANSMISSION**
DOWNLINK-MULTICAST-DIENSTÜBERTRAGUNG
TRANSMISSION DE SERVICE MULTIDIFFUSION EN LIAISON DESCENDANTE

(43) Date of publication of application: 15.02.2023
(73) Proprietor: Nokia Technologies Oy, 02610 Espoo (FI)
(72) Inventor: BELLING, Horst Thomas, 85435 Erding (DE); GODIN, Philippe, 78000 Versailles (FR); NASSAR, Mohamed Amin, 81477 Munich (DE)
(74) Representative: Laine IP Oy

(56) References cited:
- EP-A1- 4 156 726
- US-A1- 2020 092 923
- HUAWEI ET AL: "Notifications for Multicast and Broadcast", vol. RAN WG2, no. E-meeting; 20210809 - 20210827, 6 August 2021 (2021-08-06), XP052034686, Retrieved from the Internet <URL:https://ftp.3gpp.org/tsg_ran/WG2_RL2/TSGR2_115-e/Docs/R2-2108202.zip R2-2108202_Notifications_for_Multicast_and_Broadcast.docx> [retrieved on 20210806]
- HUAWEI ET AL: "Support of group notification", vol. RAN WG2, no. E-meeting; 20210519 - 20210527, 11 May 2021 (2021-05-11), XP052007155, Retrieved from the Internet <URL:https://ftp.3gpp.org/tsg_ran/WG2_RL2/TSGR2_114-e/Docs/R2-2105577.zip R2-2105577_support_of_group_notification.docx> [retrieved on 20210511]
- QUALCOMM INC: "NR Multicast group paging aspects", vol. RAN WG2, no. E-Meeting; 20210519 - 20210528, 11 May 2021 (2021-05-11), XP052006737, Retrieved from the Internet <URL:https://ftp.3gpp.org/tsg_ran/WG2_RL2/TSGR2_114-e/Docs/R2-2105018.zip R2-2105018_NR Multicast group paging _v1.doc> [retrieved on 20210511]

## Description

### FIELD

The present disclosure relates to a downlink transmission of a multicast service data and a discontinuous reception of such.

### BACKGROUND

Network may provide the same service and a selected content data simultaneously to a number of user equipments, UEs. In broadcast service the same service and the selected content data are provided to all UEs in a geographical coverage area that are authorized to receive the service and content. In multicast service the same service and the selected content data are provided to a dedicated set of UEs.

US2020/092923 discloses receiving multicast packets at a user equipment according to communication resources indicated for the multicast service session and discontinuous reception, DRX, cycle for the multicast service session.

Huawei et al: "Notifications for Multicast and Broadcast" (3GPP Draft; R2-2108202, 3rd Generation Partnership Project (3GPP), Mobile Competence Centre; 650, Route des Lucioles; F-06921 Sophia-Antipolis Cedex; France, vol. RAN WG2, no. E-meeting; 20210809-20210827 6 August 2021 (2021-08-06, XP052034686) discusses group paging and decreasing its overhead.

Huawei et al: "Support of group notification" (3GPP Draft; R2-2105577, 3rd Generation Partnership Project (3GPP), Mobile Competence Centre; 650, Route des Lucioles; F-06921 Sophia-Antipolis Cedex; France, vol. RAN WG2, no. E-meeting; 20210519-20210527 11 May 2021 (2021-05-11), XP052007155) discusses group notifications.

Qualcomm Inc: "NR Multicast group paging aspects" (3GPP Draft; R2-2105018, 3rd Generation Partnership Project (3GPP), Mobile Competence Centre; 650, Route des Lucioles; F-06921 Sophia-Antipolis Cedex; France, vol. RAN WG2, no. E-meeting; 20210519-20210528 11 May 2021 (2021-05-11), XP052006737) discusses DRX cycles and DRX paging cycles.

### SUMMARY

According to some aspects, there is provided effective utilization of power saving mode with enablement to receive downlink multicast broadcast service, MBS, data. In at least some embodiments, the MBS data and/or MBS session content is multicast data. In at least some embodiments, the MBS session is multicast service session.

The invention is defined by the features of the independent claims. Some specific embodiments are defined in the dependent claims.

According to a first aspect, there is provided a user equipment comprising means for receiving, from an application function, a service announcement for a multicast broadcast service session, the service announcement including a multicast service session identifier of the multicast broadcast service session and one or more wake up times, wherein the one or more wake up times correspond to one or more multicast service session times, wherein the one or more multicast service session times are times that multicast data for the multicast broadcast service session is scheduled to be transmitted by the application function, and wherein respective wake up times of one or more wake up times indicates a time when the user equipment is to wake up and to start reception of multicast data for the multicast broadcast service session; means for waking up the user equipment at the one or more wake up times; and means for starting reception of multicast data for multicast broadcast service session after the means for waking up wakes up the user equipment at the respective wake up times.

According to a second aspect, there is provided an apparatus including an application function, the application function comprising means for providing, to one or more user equipment, a service announcement for a multicast broadcast service session, the service announcement including a multicast service session identifier of the multicast broadcast service session and one or more wakeup times, wherein the one or more wake up times correspond to one or more multicast service session times, wherein the multicast service session times are times that multicast data for the multicast broadcast service session is scheduled to be transmitted by the application function, and wherein respective wake up times of one or more wake up times indicates a time when a user equipment is to wake up and start reception of the multicast data for the multicast broadcast service session; means for transmitting the service announcement for the multicast service session to the one or more user equipment; and means for transmitting, to the one or more user equipment, the multicast data for the multicast broadcast service session at the one or more multicast service session times corresponding to the one or more wakeup times.

According to a sixth aspect, there is provided a method of a user equipment comprising receiving, from an application function, a service announcement for multicast broadcast service session, the service announcement including a multicast service session identifier of the multicast broadcast service session and one or more wake up times, wherein the one or more wake up times correspond to one or more multicast service session times, wherein the one or more multicast service session times that multicast data for the multicast broadcast service session is scheduled to be transmitted by the application function, and wherein respective wake up times of one or more wake up times indicate a time when the user equipment is to wake up and start reception of multicast data for the multicast broadcast service session; waking up the user equipment at respective wake up times of the one or more wake up times; and starting reception of the multicast data fro the multicast broadcast service session after waking up the user equipment at respective wake up times.

According to a seventh aspect, there is provided a method of an application function comprising providing, to one or more user equipment, a service announcement for a multicast broadcast service session to a user equipment, the service announcement including including a multicast service session identifier of the multicast broadcast service and one or more wakeup times, wherein the one or more wake up times correspond to one or more multicast service session times, wherein the multicast service session times are times that multicast data for the multicast broadcast service session is scheduled to be transmitted by the application function, and wherein respective wake up times of one or more wake up times indicate when a user equipment is to wake up and start reception of the multicast data for the multicast broadcast service session; transmitting, to the user equipment, the service announcement for the multicast broadcast service session to the one or more user equipment; and transmitting the multicast data for the multicast broadcast service session at the one or more multicast service session times to the one or more user equipment.

According to further aspects, there is provided computer programs configured to cause an apparatus to perform any of the methods of the sixth or seventh aspect.

According to further aspects, there is provided a non-transitory computer readable medium comprising program instructions that, when executed by at least one processor, cause an apparatus to at least to perform any of the methods of the sixth or seventh aspect.

### BRIEF DESCRIPTION OF THE DRAWINGS

FIGURE 1 illustrates an example system in accordance with at least some embodiments.
FIGURE 2A illustrates signalling in accordance with at least some embodiments.
FIGURE 2B illustrates signalling in accordance with at least some embodiments.
FIGURE 3 illustrates an example apparatus capable of supporting at least some embodiments.
FIGURE 4A illustrates a flow graph of a method in accordance with at least some embodiments.
FIGURE 4B illustrates a flow graph of a method in accordance with at least some embodiments.
FIGURE 4C illustrates a flow graph of a method in accordance with at least some embodiments.
FIGURE 4D illustrates a flow graph of a method in accordance with at least some embodiments.
FIGURE 4E illustrates a flow graph of a method in accordance with at least some embodiments.

### EMBODIMENTS

It is provided a discontinuous reception, DRX, for a downlink, DL, multicast service transmission. A downlink multicast service may be utilized for example for noncontinuous software updates. To enable power saving, UEs utilize the DRX in order to be in a sleep mode during no activity and to wake up only at specific times. In order to enable DL multicast data transfer the receiving UEs shall be in active mode or wake up. In order to avoid to continuously monitor possible multicast data transmissions by a UE, the UE is configured to wake up at indicated wake up times, and to start reception of the multicast data. The wake up times may be provided to UEs by 3GPP fifth generation core, 5GC, or by an application function, AF. 5GC may be configured to provide the wake up times to a UE in response to a session join request sent by the UE. An AF may be configured to provide the predefined wake up times to a UE in a service announcement for a MBS session. In addition, the AF provides information about the wake up times to a multicast broadcast session management function, MB SMF, when configuring the MBS session. The MB SMF is configured to activate MBS sessions based on the wake up times. In the following, multicast service session for DL transmission is referred.

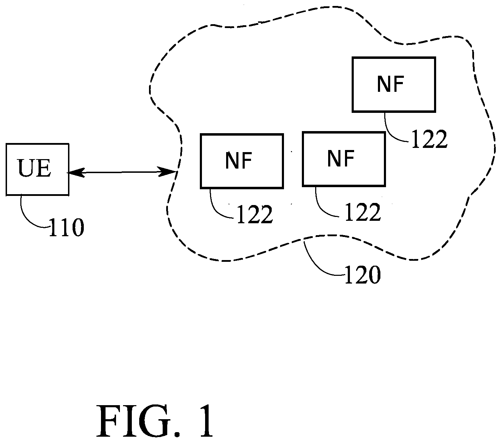

FIGURE 1 illustrates an example system in accordance with at least some embodiments. The system comprises a user equipment, UE, 110 and a communication network 120. The UE 110 is able to receive data from or via the communication network 120 via point-to-multipoint, PTM, and point-to-point, PTP, connection.

The communication network 120 may be a public land mobile network, PLMN, or a non-public network, NPN, for example as defined in 3GPP standardization specification TS23.501. A NPN may be a standalone NPN, SNPN, or Public Network Integrated NPN, PNI-NPN. The communication network 120 may be a non-3GPP network, for example a cable network, a network based on a wireless network protocols based on IEEE 802.11, Wi-Fi, or a Wireless Local Area Network, WLAN. The communication network 120 or a radio access may be based on long term evolution advanced, LTE Advanced, LTE-A, or new radio, NR, also known as fifth generation, 5G, without restricting the embodiments to such an architecture, however. The embodiments may also be applied to other kinds of communications networks having suitable means by adjusting parameters and procedures appropriately. Some examples of other options for suitable systems and radio access networks, RANs, are the universal mobile telecommunications system (UMTS) radio access network (UTRAN or E-UTRAN), long term evolution (LTE, the same as E-UTRA), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

A non-3GPP access, for example a WLAN access may be arranged via non-3GPP interworking function, N3IWF. A N3IWF is configured to provide an access point to the 5G core network outside the 5G radio access network, RAN. A N3IWF is configured to route messages outside the 5G RAN, of non-3GPP networks, over Internet Protocol, IP, security tunnels. The AMF of the 5G core network is configured to implement non-access-stratum, NAS, security, e.g. ciphering and integrity protection algorithms.

In FIGURE 1 a user equipment, UE, 110 comprises a mobile equipment including wireless mobile communication device operating with or without a subscriber identity module, SIM. The subscriber identifier may comprise a subscriber identity module, SIM, a universal subscriber identity module, USIM, or any corresponding subscriber identifier, for example an executable or a programmable identifier. A subscriber identifier enables subscriber identification, for example for authentication between the UE and a network. A user equipment may include, but is not limited to, a smartphone, a cellular phone, a laptop computer, a tablet computer, a machine-to-machine node, M2M node, a machine-type-communication node, MTC node, a massive machine-type-communication node, mMTC node, an internet-of-things node, IoT node, a car telemetry unit, or any terminal or entity enabling wireless communication or access to a wireless network. A UE may be a device using a wireless modem (alarm or measurement device, etc.), laptop and/or touch screen computer, tablet, game console, notebook, and multimedia device. A UE may be a device having capability to operate in Internet of Things (IoT) network which is a scenario in which objects are provided with the ability to transfer data over a network without requiring human-to-human or human-to-computer interaction.

5G enables using multiple input - multiple output (MIMO) technology at both UE and network side, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 7GHz, cmWave and mmWave, and also being integratable with existing legacy radio access technologies, such as the LTE. Below 7GHz frequency range may be called as FR1, and above 24GHz (or more exactly 24- 52.6 GHz) as FR2, respectively. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 7GHz - cmWave, below 7GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in a constellation may cover several satellite-enabled network entities that create on-ground cells. The on-ground cells may be created through an on-ground relay node or by a gNB located on-ground or in a satellite.

In FIGURE 1 the communication network 120 is equipped with one or more network functions, NF, 122. A network function may refer to an operational and/or a physical entity. A network function may be a specific network node or element, or a specific function or set of functions carried out by one or more entities, such as virtualized network elements, VNFs. One physical node may be configured to perform plural NFs. Examples of such network functions include a resource control or management function, session management or control function, interworking, data management or storage function, authentication function or a combination of two or more of these functions.

In case of a third generation partnership project, 3GPP, fifth generation, 5G, system service based architecture, SBA, core network, NFs may comprise at least some of an access and mobility management function, AMF, a session management function, SMF, a network slice selection function, NSSF, a network exposure function, NEF, a network repository function, NRF, a unified data management, UDM, a unified data repository, UDR, an authentication server function, AUSF, a policy control function, PCF, and an application function, AF. A NEF is configured to provide access to exposed network services and capabilities. A UDM is configured to manage network user data in a single, centralized element. A UDM is configured to host functions related to data management, such as an authentication credential repository and processing function, ARPF, which is configured to select an authentication method based on a subscriber identity and configured policy. A UDR facilitates the share and the provisioning of subscriber-related data throughout services of a 3GPP system.

The communication network 120 may further comprise a security edge protection proxy, SEPP, configured to operate as a security edge node or gateway. The NFs may communicate with each other using representational state transfer, REST, application programming interfaces, for example. These may be known as RESTful APIs. Further examples of NFs include NFs related to gaming, streaming or industrial process control. The system may comprise also nodes from 3G or 4G node systems, such as home subscriber server, HSS, and a suitable interworking function for protocol translations between e.g. Diameter and JSON-based RESTful APIs. While described herein primarily using terminology of 5G systems, the principles as described herein are applicable also to other communication networks, such as 4G networks and non-3GPP networks, for example.

While the example of FIGURE 1 has one communication network, 120, two or more networks may be present. In case of multi-networks, in FIGURE 1, the SEPP is a network node at the boundary of an operator's network that may be configured to receive a message, such as an Hypertext Transfer Protocol, HTTP, request or HTTP response from an NF, to apply protection for sending and to forward the thus reformatted message through a chain of intermediate nodes, such as IP eXchanges, IPX, towards a receiving SEPP. The receiving SEPP receives a message sent by the sending SEPP and forwards the message towards an NF within its operator's network, e.g. the AUSF.

A physical link from a user device to the network node is called uplink, UL, or reverse link and the physical link from the network node to the user device is called downlink, DL, or forward link. Network nodes or their functionalities may be implemented by using any node, host, server or access point etc. entity suitable for such a usage. A communications system typically comprises more than one network node in which case the network nodes may also be configured to communicate with one another over links, wired or wireless, designed for the purpose. These links may be used for signalling purposes. The network node is a computing device configured to control the radio resources of the communication system it is coupled to. The network node may also be referred to as a base station (BS), an access point or any other type of interfacing device including a relay station capable of operating in a wireless environment. The network node includes or is coupled to transceivers. From the transceivers of the network node, a connection is provided to an antenna unit that establishes bi-directional radio links to user devices. The antenna unit may comprise a plurality of antennas or antenna elements. The network node is further connected to core network, CN, or next generation core, NGC. Depending on the system, the counterpart on the CN side can be a serving gateway, S-GW, routing and forwarding user data packets, packet data network gateway, P-GW, for providing connectivity of user devices, UEs, to external packet data networks, or mobile management entity, MME, etc.

A multicast broadcast service, MBS, refers to a point-to-multipoint service configured to provide the same service and a specific content simultaneously to a number of UEs. MBS includes a multimedia broadcast multicast service, MBMS, which refers to a point-to-multipoint interface specification for existing and upcoming 3GPP cellular networks, which is designated to provide delivery of broadcast and multicast services, both within a cell as well within the core network. The specification is referred to as evolved multimedia broadcast multicast service, eMBMS, or LTE broadcast, when transmissions are delivered through an LTE network. 5G CN is configured to receive a single copy of MBS data packets and to deliver, in PTP, separate copies of the MBS data packets to individual UEs via UE-specific PDU sessions. In PTP, each UE is associated to MBS session via a PDU session. In case of PTM, 5G CN is configured to receive a single copy of MBS data packets and to deliver a single copy of the MBS data packets to RAN node.

In broadcast, a distributed service announcement includes information on a service, service parameters for activation of the service, one or more wake up times, and optionally other parameters. At the distributed one or more wake up times, a session is established for enabling DL broadcast between a 5GC and a NG RAN. After that, data is broadcasted over air interface. After the data has been broadcasted and/or the period of the broadcast session expired, the session and 5GC resources are released.

In multicast, a distributed service announcement includes information on a service, service parameters for activation of the service, one or more wake up times, and optionally other parameters. A UE joins a session by indicating to a 5GC that the UE wants to receive multicast data. The session may be identified by a multicast session ID as distributed in the service announcement. The UE session join request for joining the session may trigger a session establishment, where transmission resources are established for transferring DL multicast data between the 5GC and the NG RAN. After the session has been established, the multicast data is transmitted to the UE, and other UEs that have been authorized to receive the multicast content. After the data has been transmitted and/or the multicast session period expired, the UE sends a session leave message and leaves the multicast session. After there is no need to transfer multicast data, resource in 5GC and the multicast session are released. A multicast MBS session requires the 5GS to authorize the UE based on authorization information, for example preconfigured or provided by the AF. UE authorization for a specific multicast MBS session may be performed via a service announcement, for example.

In order to arrange a MBS session, a UE is configured to perform reception of MBS data. The MBS data may be transferred to the UE via established point-to-multipoint, PTM, or point-to-point, PTP, connection. A UE is configured to perform signalling for joining and leaving a MBS session.

A RAN is configured to control switching between PTM and PTP delivery per UE. A RAN is configured to support a MBS sessions during a handover. A NG RAN is configured to deliver data packets from 5G shared for multiple UEs over radio using PTM and/or PTP, and to control a switch between PTM/PTP deliver per UE. A NG RAN is configured to support MBS session continuity by driving handovers, and to support notification of MBS session activation over radio interface.

An AMF is configured to select a SMF with MBS capabilities. A SMF is configured to discover a multicast broadcast SMF, MB SMF, for a MBS session, and to authorize a MBS session join operation, if applicable. The SMF is configured to interact with the MB SMF in order to obtain MBS data for individual delivery and in order to manage MBS session content. The SMF is configured to interact with RAN for shared data transmission resource establishment.

A MB SMF is configured to handle a MBS session management, including quality of service, QoS, control. A MB SMF is configured to control transport of MBS flows from a multicast broadcast user plane function, MB UPF, to RAN. A user plane function, UPF, is configured to support features and capabilities to facilitate user plane operation, for example packet routing and forwarding, interconnection to a data network, policy enforcement and data buffering. A MB SMF is configured to arrange MB UPF for multicast broadcast, MB, flows transport based on a local policy or policy rules from a policy control function, PCF, which provides policy rules for control plane functions. A MB SMF is configured to interact with SMF in order to modify a protocol data unit, PDU, session associated with MBS. A MB SMF is configured to interact with a RAN, via AMF and SMF, in order to establish data transmission resources between MB UPF and RAN nodes for 5GC shared MBS traffic delivery method. A MB SMF is configured to control data transport using 5GC individual MBS traffic delivery method.

An AF is configured to provide MBS service information or a request for MBS service from 5GC by providing service information, which may include QoS requirement for 5GC. An AF is configured to negotiate with a NEF for MBS related service exposure. An AF is configured to allocate a temporary mobile group identity, TMGI, and to start a MBS session and MBS transmission. An AF is configured to arrange resources for a MBS session set up in MB UPF and NG RAN for shared MBS delivery. An AF is configured to signal with NG RAN and MB SMF for MBS session management. An AF is configured to select NG RANs for notification of MBS session activation and for broadcast. An AF is configured to signal with NG RAN for NG RAN MBS capability, and to interact with NEF for MBS related service exposure. An AF is authorized by 5GC to deliver MBS data to 5GC and/or to interact with 5GC. For signalling exchange with 5GC, NEF / MB SF are configured to perform authorization to external AF in order to determine, whether interaction of 5GC is allowed or not.

A NEF is configured to provide an interface to AFs for MBS procedures including service provisioning, MBS session- and QoS management. A NEF is configured to interact with AF and MB SMF for MBS session operations, determination of transport parameters and session transport. A NEF is configured to select of serving MB SMF for a MBS session.

A MB STF is configured to handle packet transport functionalities to any IP multicast enabled application, such as framing, multiple flows, packet forward error correction, FEC, and encoding. A MB STF is configured to handle MBS delivery of input files as objects or object flows.

UDM is configured to support management of subscriptions for authorization and for MBS sessions. The subscriber profile in the UDM includes subscription information in order to give a subscription for MBS services in the UDM. The subscription for MBS may include allowance to join any multicast service or allowance to join the indicated specific multicast service. The MBS subscription data is provided by the UDM to the SMF during PDU session establishment, as defined for example in TS23.502, using Numd_SDM service for subscription data type "UE context in SMF data". The SMF selection subscription data is provided by the UDM to the AMF as described in TS23.502. A UDR supports management of UE authorization information for MBS session. An UE authorization for multicast services may define, whether a UE is authorized to receive any MBS multicast session data at all, or whether and how a UE is authorized to receive a particular multicast service. If the UE is not authorized to receive MBS session data, the network will not send the data to the UE even if the MBS session is open to any UEs.

A MBS session identifier, ID, is used to identify the MBS session throughout the 5G system, on an interface towards AF, and between AF and UE, and towards UE. The MBS session ID may comprise a source specific IP multicast address for a MBS multicast session, or a temporary mobile group identity, TMGI, for identifying a multicast or a broadcast session. The TMGI is a radio resource configured to identify a MBS bearer service. This may be utilized instead of using IP multicast address and access point name. A TMGI is allocated by multicast broadcast service center, MB SC, and the TMGI for a specific MBS is provided to a UE during MBS activation procedure. The UE may obtain at least one MBS session ID via MBS service announcement. For a MBS multicast session, a source specific IP multicast address can be assigned by 5GC or an external network. The source specific IP multicast address is used to identify an MBS multicast session and it comprises two IP addresses: one for an IP unicast address used as source address in IP packets for identifying the source of the multicast service, like AF/AS, and the other for an IP multicast address used as destination address in related IP packets for identifying a multicast service associated with the source.

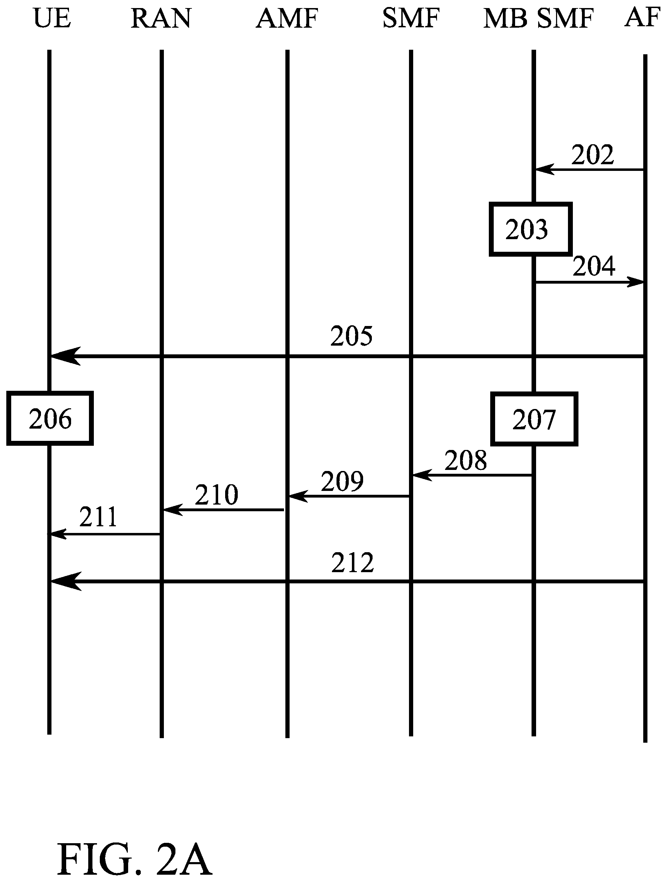

FIGURE 2A illustrates signalling in accordance with at least some embodiments. On the vertical axes are disposed, from left to right, a UE, a RAN, a AMF, a SMF, a MB SMF, and a AF. Time advances from the top toward the bottom.

An MBS session is configured. The AF may provide MBS service information or a request for MBS service from 5GC. The AF may negotiate with a NEF for MBS related service exposure. The AF may allocate a temporary mobile group identity, TMGI. The AF may arrange resources for a MBS session set up in MB UPF and NG RAN for shared MBS delivery. The AF may signal with NG RAN and MB SMF for MBS session management. The AF may select NG RANs for notification of MBS session activation and for broadcast. The AF may signal with NG RAN for NG RAN MBS capability, and to interact with NEF for MBS related service exposure. A NEF may provide an interface to AFs for MBS procedures including service provisioning, MBS session- and QoS management. The NEF may interact with AF and MB SMF for MBS session operations, determination of transport parameters and session transport. The NEF may select a serving MB SMF for a MBS session.

In phase 202, the AF provides a configure request to the MB SMF. The configure request includes a MBS session identifier, MBS session ID, and one or more wake up times. The request may be sent via NEF or MB SF. Wake up times are configured to correspond to times of MBS sessions. The one or more wake up times may include for example fixed times each day or hour or minute, first wake up time and repetition period, or list of wake up times. One or more wake up times may include one or more start times of MBS sessions, one or more start and end times of MBS sessions, one or more start times and periods of MBS sessions.

In phase 203 MB SMF stores the MBS session configuration and the wake up times. The MB SMF stores the wake up times in response to receiving the configure request including the wake up times.

In phase 204, the MB SMF sends a configure reply to the AF. After the wake up times with the MBS session configuration are stored, the MB SMF is configured to send a reply to the AF, which sent the configure request.

In phase 205, the AF sends a service announcement for a MBS session. The AF is configured to send the service announcement to the UE. The service announcement distributes information on the service and parameters on the service activation. The service announcement is extended with wake up times. The service announcement for MBS session includes the MBS session ID and the wake up times. At this phase the UE is informed of wake up times, which correspond to times of upcoming MBS sessions.

In phase 206, the UE wakes up at the wake up times as indicated in the service announcement. The UE is configured to wake up at the indicated wake up times and starts reception of MBS data and/or listening for paging related to the MBS session. Alternatively or in addition, the UE may be configured to send a session join for a MBS session, when it wakes up at the indicated wake up times. Via the session join the UE indicates to 5GC that the UE wants to receive MBS data identified by specific MBS session ID. The session join from the UE may trigger transmission resources establishment for the DL MBS data between the 5GC and the NG-RAN. The UE may take part in several MBS sessions, or be authorized to receive several MBS session transmissions. In such case the UE wakes up at the indicated wake up times of the several MBS session in order to receive DL transmission of each of the MBS session. In addition, the UE may employ other power saving modes, DRX or eDRX and monitor paging at the indicated intervals.

In phase 207, the MB SMF activates a MBS session at the indicated wake up times. The MG SMF may be configured to activate and deactivate a multicast or a broadcast session, in accordance to the MBS ID, and in accordance to the indicated wake up times.

In phase 208, the MB SMF sends a paging message to SMF. In phase 209, the SMF sends the paging message to AMF. In phase 210, the AMF sends the paging message RAN. In phase 211, the RAN sends the paging message to UE. The paging or activation message is transmitted to UE in order to inform and notify UE on activation of the MBS session. The UE may listen to the unicast paging occasion following the one or more wake up times.

In phase 212, the AF starts sending MBS session content at wake-up times. The MBS session content is transferred via DL link to the UE. The MBS data is transferred to UEs. After the MBS data has been transferred, the UE may leave the MBS session. This may be indicated to the 5G by sending a session leave message. After the MBS session is over and the MBS data transferred, the MBS session is released. The resources in 5G that were established for the MBS session, are released.

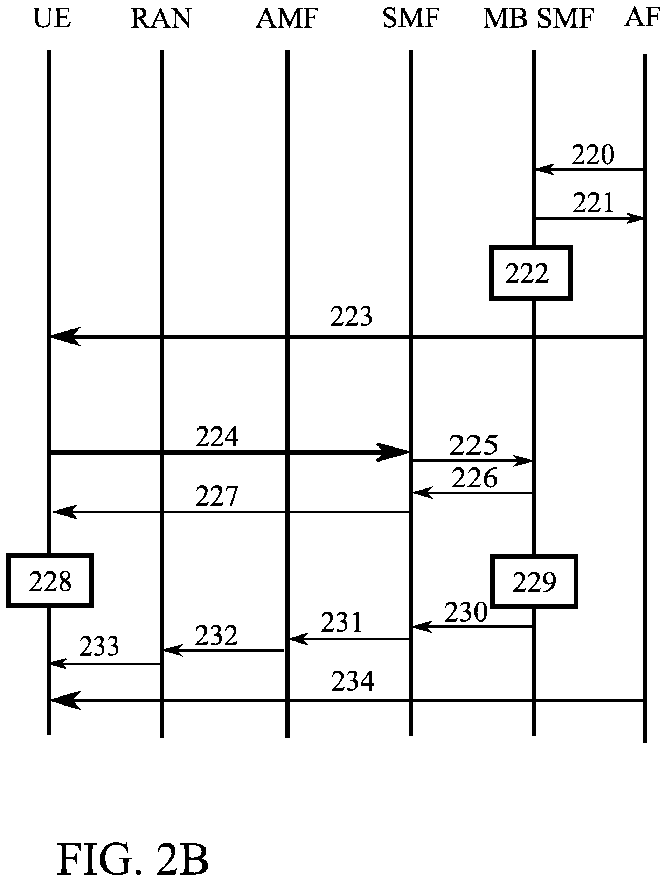

FIGURE 2B illustrates signalling in accordance with at least some embodiments. On the vertical axes are disposed, from left to right, a UE, a RAN, a AMF, a SMF, a MB SMF, and a AF. Time advances from the top toward the bottom.

An MBS session is configured. The AF may provide MBS service information or a request for MBS service from 5GC. The AF may negotiate with a NEF for MBS related service exposure. The AF may allocate a temporary mobile group identity, TMGI. The AF may arrange resources for a MBS session set up in MB UPF and NG RAN for shared MBS delivery. The AF may signal with NG RAN and MB SMF for MBS session management. The AF may select NG RANs for notification of MBS session activation and for broadcast. The AF may signal with NG RAN for NG RAN MBS capability, and to interact with NEF for MBS related service exposure. A NEF may provide an interface to AFs for MBS procedures including service provisioning, MBS session- and QoS management. The NEF may interact with AF and MB SMF for MBS session operations, determination of transport parameters and session transport. The NEF may select a serving MB SMF for a MBS session.

In phase 220, the AF provides a configure request to the MB SMF. The configure request includes a MBS session identifier, MBS session ID, and one or more wake up times. The request may be sent via NEF or MB SF. Wake up times are configured to correspond to scheduled times of MBS sessions. The one or more wake up times may include for example fixed times each day or hour or minute, first wake up time and repetition period, or list of wake up times. One or more wake up times may include one or more start times of MBS sessions, one or more start and end times of MBS sessions, one or more start times and periods of MBS sessions.

In phase 221, the MB SMF sends a configure reply to the AF. The MB SMF is configured to send a reply to the AF, which sent the configure request.

In phase 222, the MB SMF stores the MBS session configuration and the wake up times. The MB SMF stores the wake up times in response to receiving the configure request including the wake up times. The wake up times may be stored with the MBS session information, for example in UDM/UDR or in MB SMF.

In phase 223, the AF is sends a service announcement including a MBS session ID. The service announcement provides information on the MBS service and parameters for activating the MBS service. After service announcement the MBS session is established in order to enable DL MBS data transfer between the 5GC and the NG-RAN. The session establishment may be triggered by a request form the AF.

The UE joins a MBS session. The UE may indicate that it wants to utilize sleep periods. This indication is optional.

In phase 224, the UE sends a PDU session modify message to the SMF. The PDU session modify message includes request to join MBS. The message may include indication on desire of the UE to use sleep periods.

In phase 225, the SMF sends a request for information about the MBS session to MB SMF. The SMF is configured to send the request to MB SMF in response to receiving the PDU session modify message from the UE.

In phase 226, the MB SMF sends an information response to SMF. The response is sent is response to receiving a request for information about the MBS session form the SMF. The response includes one or more wake up times, in addition to other parameters, like QoS parameters and 5QI (5G QoS Identifier). At this phase the wake up times are send from MB SMF to SMF. The SMF configured to process join MBS receives information on wake up times from a database storing information about the MBS session, which may be UDM/UDR or MB SMF.

In phase 227, the SMF sends, in response to receiving information response from MB SMF, a PDU session modify response to the UE. The PDU session modify response includes join acknowledgement with the wake up times. At this phase, in response to sending a PDU session modify message to join a MBS at phase 224, the UE receives the wake up times, which correspond to times of the upcoming MBS sessions.

At phase 228, the UE wakes up at the wake up times as indicated in the service announcement. The UE is configured to wake up at the indicated wake up times and starts reception of MBS data and/or listening for paging related to the MBS session. Alternatively or in addition, the UE may be configured to send a join request for a MBS session, when it wakes up at the indicated wake up times and leaves a PSM mode. The UE may take part in several MBS sessions, or be authorized to receive several MBS session transmissions. In such case the UE wakes up at the indicated wake up times of the several MBS session in order to receive DL transmission of each of the MBS session. In addition, the UE may employ DRX or eDRX and monitor paging at the indicated intervals.

At phase 229, the MB SMF activates an MBS session at the indicated wake up times. The MG SMF may be configured to activate and deactivate a multicast or a broadcast session, in accordance to the MBS ID, and in accordance to the indicated wake up times.

In phase 230, the MB SMF sends a paging message to SMF. In phase 231, the SMF sends the paging message to AMF. In phase 232, the AMF sends the paging message RAN. In phase 233, the RAN sends the paging message to UE. The paging or activation message is transmitted to UE in order to inform and notify UE on activation of the MBS session. The UE may listen to the unicast paging occasion following the one or more wake up times.

In phase 234, the AF starts sending MBS session content at wake-up times. The MBS session content is transferred via DL link to the UE. After the DL MBS data has been sent, or the time of the MBS session has expired, the MBS session is released. The UE may leave the session by sending a leave session message. Resources of 5GC for the MBS session are released.

In case a UE wakes up at the indicated wake up time, as illustrated in the previous embodiments with FIGURES 2a and 2b, but the UE does not receive data via the MBS session, the UE may enter to an idle mode or to a PSM mode. Alternatively, a UE may send a request to leave the MBS session when entering to PSM mode.

In prior solutions, a UE that receive data via unicast may be in a power saving mode, PSM, where the UE sleeps for indefinite time, after a certain timer expires. The timer has been negotiated with the network via NAS signalling. The times starts when the UE enters into idle mode. The UE exits the PSM once there is UL data to be sent, but it cannot receive DL data or monitor paging while PSM is entered. In case of DRX, DRX parameters are negotiated with the network via NAS signalling. DRX is used on lower levels in order to define active on-times to monitor paging control channel, PCCH, which enables readiness for paging reception. In DRX mode the UE can sleep during inactive off-times. DRX may be in range of milliseconds. In extended DRX, eDRX, an extended idle mode DRX cycle length is negotiated with the network via NAS signalling. The cycle length of eDRX may be from order of seconds to hours or days. In eDRX mode the UE is reachable for paging in specific paging hyperframes, PH, which correspond to a specific set of H-SFN values.

The PH computation is a formula that is function of the extended idle mode DRX cycle, and a UE specific identifier, as described in TS36.304. In addition to prior PSM, DRX or eDRX, there is enabled a power saving mode, which is interrupted at indicated, predefined wake up times. The multicast service sessions are received by a UE at the indicated, predefined wake up times. The multicast service sessions are timed according to the indicated wake up times. The wake up times as provided may be used in addition or alternatively with the prior art solutions, like PSM, DRX and/or eDRX. This enables for example IoT devices with fixed wake up times to wake up at the same time, when there is multicast data to be sent. This enables all IoT devices to wake up at the same time for reception of a multicast DL data. This way periods of inactivity or sleep of the IoT devices may be optimized, which enables power saving.

MBS may be provided in one or several MBS service areas. An MBS service area may be identified by a cell list or a tracking area list. Only UEs within the MBS service area may receive content data, while UEs outside the MBS service area are not allowed to receive location specific content. For multicast, UEs outside the MBS service are not allowed to join the MBS service. The network shall not deliver location specific content to any UE moved out of the MBS service area. The UE may obtain service area information of the local multicast service via MBS service announcement or via NAS signalling, wherein during UE session join messaging a reply of accepting or rejecting includes cell list or a tracking area list. A location dependent MBS comprises local MBS in several MBS areas. The same MBS session ID and different area session ID are used for each MBS service area in a location dependent MBS. The area session ID may be allocated by MB SMF and used in combination with MBS session ID. The UEs may not be aware of the area session ID, but only on the MBS session ID. The location dependent MBS enables distribution of different content data to different MBS areas.

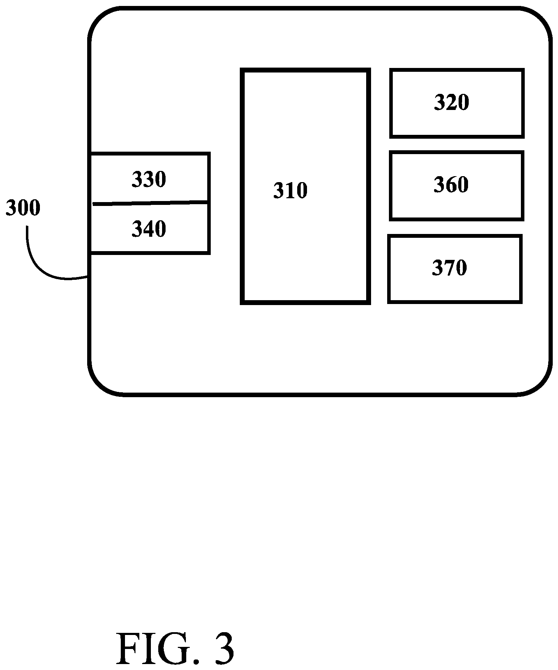

FIGURE 3 illustrates an example apparatus capable of supporting at least some embodiments. Illustrated is device 300, which may comprise, for example, an NF, a DCS node or entity, or an UE. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Zen processing core designed by Advanced Micro Devices Corporation. Processor 310 may comprise at least one AMD Threadripper and/or Intel Core processor, for example. Processor 310 may comprise at least one application-specific integrated circuit, ASIC. Processor 310 may comprise at least one field-programmable gate array, FPGA. Processor 310 may be means for performing method steps in device 300, such as processing, obtaining, determining, functioning, receiving and responding, for example. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver.

Device 300 may comprise user interface, UI, 360. UI 360 may comprise at least one of a display, a keyboard, a touchscreen, a vibrator configured to signal to a user by causing device 300 to vibrate, a speaker and a microphone. A user may be able to operate device 300 via UI 360, for example to configure user data management parameters.

Device 300 may comprise or be configured to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300. A UE comprises the user identity module 370 configured to comprise a real subscriber identifier, as disclosed.

Processor 310 may be furnished with a transmitter configured to output information from processor 310, via electrical leads internal to device 300, to other devices comprised in device 300. Such a transmitter may comprise a serial bus transmitter configured to, for example, output information via at least one electrical lead to memory 320 for storage therein. Alternatively to a serial bus, the transmitter may comprise a parallel bus transmitter. Likewise processor 310 may comprise a receiver configured to receive information in processor 310, via electrical leads internal to device 300, from other devices comprised in device 300. Such a receiver may comprise a serial bus receiver configured to, for example, receive information via at least one electrical lead from receiver 340 for processing in processor 310. Alternatively to a serial bus, the receiver may comprise a parallel bus receiver. Device 300 may comprise further devices not illustrated in FIGURE 3.

Processor 310, memory 320, transmitter 330, receiver 340, UI 360 and/or a user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

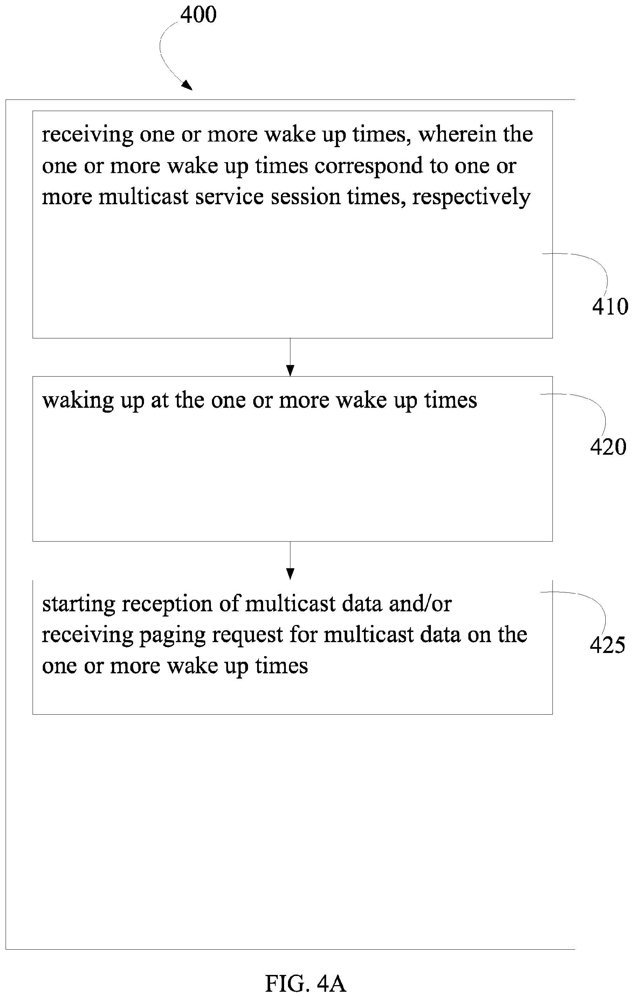

FIGURE 4A is a flow graph of a method 400 in accordance with at least some embodiments. The phases of the illustrated method may be performed in an apparatus such as a UE or an IoT device, for example, wherein the UE may comprise means for performing the method, or in a control device configured to control the functioning thereof, when installed therein.

The phase 410 comprises receiving one or more wake up times, wherein the one or more wake up times correspond to one or more multicast service session times, respectively. The phase 420 comprises waking up at the one or more wake up times. The UE may prepare to receive data for the one or more multicast service and/or listen for paging requests for the multicast services. The phase 425 comprises starting reception of multicast data and/or receiving paging request for multicast data on the one or more wake up times.

The method 400 of FIGURE 4A may further comprise receiving a service announcement for a multicast service including the one or more wake up times. The method may further comprise sending a join multicast service request and receiving a join multicast service reply including the one or more wake up times. The method may further comprise receiving join reply as a downlink, DL, non access stratum, NAS, message. The one or more wake up times include at least one of: fixed repeated times; a first time and a repetition frequency; and fixed times for each day. The method may comprise receiving multiple wake up times corresponding to multiple multicast service session times, and means for waking up and starting reception of multicast data at the wake up times of each of the multicast service sessions. Receiving paging request for multicast data on the one or more wake up times may comprise listening to the unicast paging occasion following the one or more wake up times.

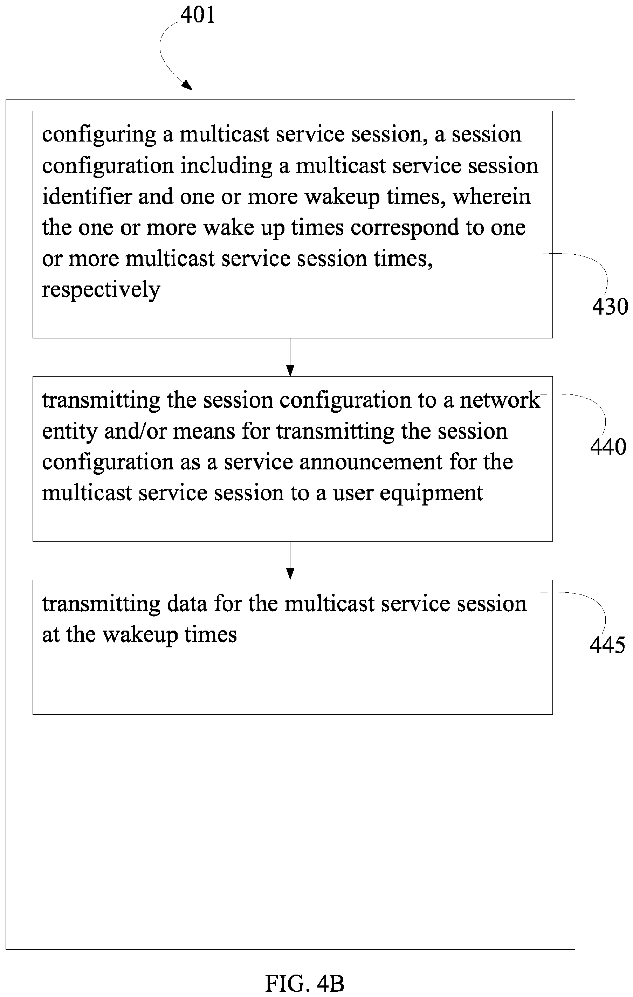

FIGURE 4B is a flow graph of a method 401 in accordance with at least some embodiments. The phases of the illustrated method may be performed in an apparatus such as a NF, for example a AF, wherein the NF may comprise means for performing the method, or in a control device configured to control the functioning thereof, when installed therein. The phase 430 comprises configuring a multicast service session, a session configuration including a multicast service session identifier and one or more wakeup times, wherein the one or more wake up times correspond to one or more multicast service session times, respectively. The phase 440 comprises transmitting the session configuration to a network entity and/or means for transmitting the session configuration as a service announcement for the multicast service session to a user equipment. The phase 445 comprises 445 transmitting data for the multicast service session at the wakeup times.

The method 401 may further comprise transmitting a service announcement for a multicast service session including the multicast service session identifier and the one or more wake up times.

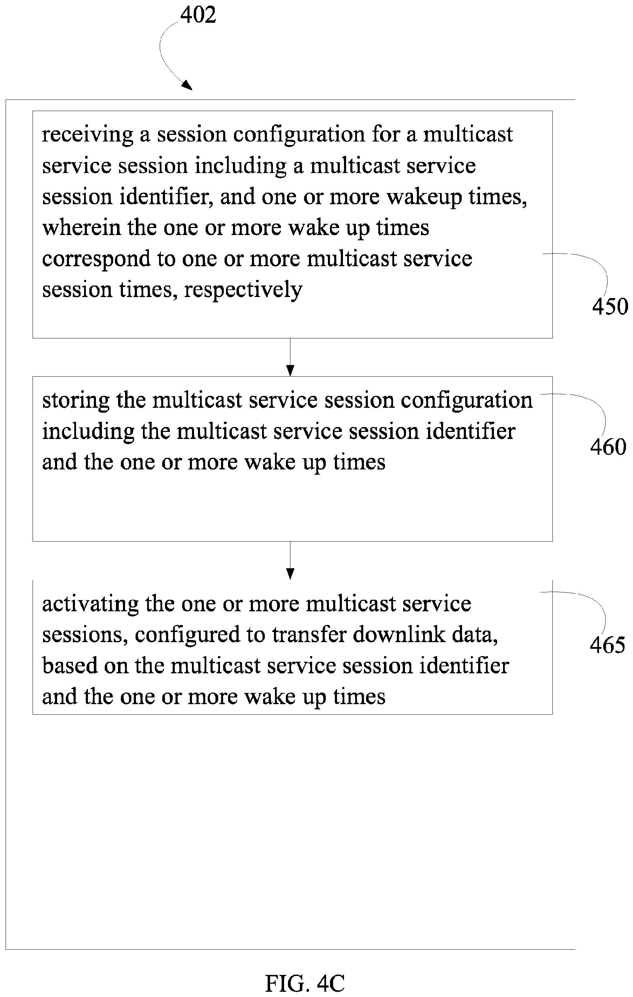

FIGURE 4C is a flow graph of a method 402 in accordance with at least some embodiments. The phases of the illustrated method may be performed in an apparatus such as a NF, for example a MB SMF, wherein the NF may comprise means for performing the method, or in a control device configured to control the functioning thereof, when installed therein. A phase 450 comprises receiving a session configuration for a multicast service session including a multicast service session identifier, and one or more wakeup times, wherein the one or more wake up times correspond to one or more multicast service session times, as timed, allocated or scheduled. The phase 460 comprises storing the multicast service session configuration including the multicast service session identifier and the one or more wake up times. The multicast service session configuration may be stored to MB SMF or to UDM/UDR. The phase 465 comprises activating the one or more multicast service sessions, configured to transfer downlink data, based on the multicast service session identifier and the one or more wake up times. The method 402 may further comprise, in response to an information request for the multicast service session, providing the wake up times. The method 402 may further comprise transferring the multicast service session configuration including the multicast service session identifier and the one or more wake up times to other session management functions when queried for multicast service configuration information.

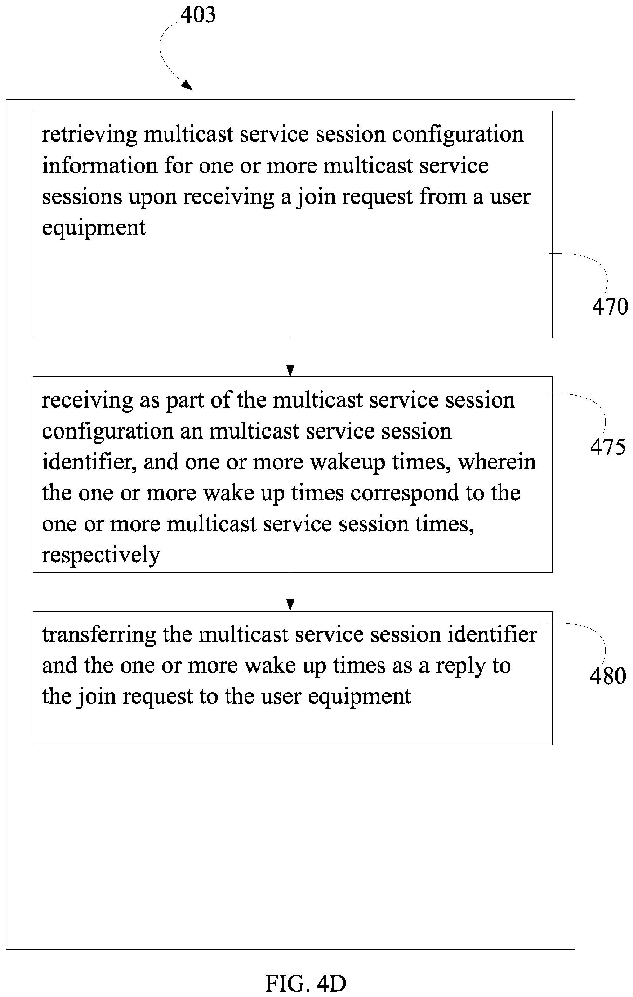

FIGURE 4D is a flow graph of a method 403 in accordance with at least some embodiments. The phases of the illustrated method may be performed in an apparatus such as a NF, for example a SMF, wherein the SMF may comprise means for performing the method, or in a control device configured to control the functioning thereof, when installed therein. The phase 470 comprises retrieving MBS session configuration information for one or more multicast service sessions upon receiving a join request from a user equipment. The phase 475 comprises receiving as part of the multicast service session configuration an multicast service session identifier, and one or more wakeup times, wherein the one or more wake up times correspond to the one or more multicast service session times, respectively. The phase 480 comprises transferring the multicast service session identifier and the one or more wake up times as a reply to the join request to the user equipment.

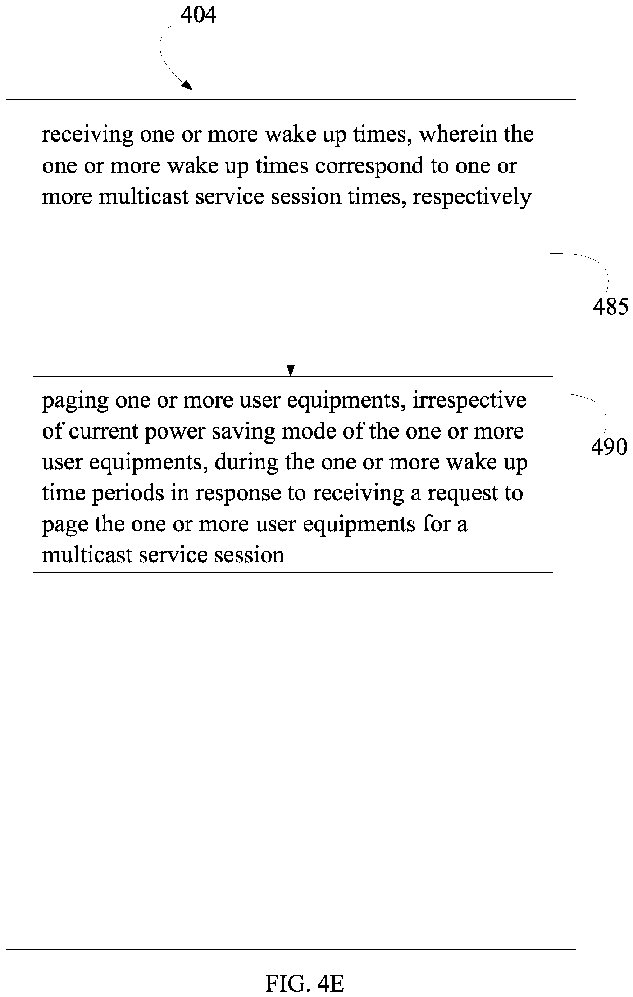

FIGURE 4E is a flow graph of a method 404 in accordance with at least some embodiments. The phases of the illustrated method may be performed in an apparatus such as a NF, for example a AMF, wherein the NF may comprise means for performing the method, or in a control device configured to control the functioning thereof, when installed therein. The phase 485 comprises receiving one or more wake up times, wherein the one or more wake up times correspond to one or more multicast service session times, respectively. The multicast service session times refer to scheduled times of the multicast service sessions. The phase 490 comprises paging one or more user equipments, irrespective of current power saving mode of the one or more user equipments, during the one or more wake up time periods in response to receiving a request to page the one or more user equipments for a multicast service session. The method 404 may further comprise rejecting request to page a user equipment outside wake up time periods if that user equipment is in power saving mode.

In accordance to previously presented utilization of wake up times, the UE may enter PSM when there is no DL multicast data, until the next wake up time. This enables enhanced power saving, where the access stratum is deactivated in PSM. In prior PSM arrangements, the UE cannot receive paging, since the UE's lower layers or RRC becomes deactivated in PSM, and the UE wakes up only when it is about to send UL data. In addition, the network or AMF will send a DL data notification reject message to the SMF, when receiving a DL data notification message, because AMF knows that the UE is sleeping and cannot receive paging.

The embodiments described herein utilize PSM. However, contrary to prior solutions, the UE is configured to wake up - not only when there is UL data to be sent - but also when MBS pre-configured wake up times indicate activation time in order to listen for any incoming MBS content or data. In the network side, when AMF receives a request to page the UE for the MBS session at any of the wake up times or wake up time periods, the AMF will not reject the request back to SMF, but instead will proceed and page the UE. Thus, the AMF is aware of the wake up time for the multicast service sessions. For example, the AMF may get the wake up times information during the join reply.

Wake up referred in the previous refers to interruption of a power saving mode or activation of a device or a function. The wake up times or time periods referred in previous may be called indicated, shared, configured or pre-configured wake up times. The wake up times indicate wake up times for one or more UEs, and the same times refer to timed multicast service sessions. The wake up times correspond to the times of allocated or scheduled multicast service sessions. The wake up times may indicate time periods corresponding to multicast service session periods. The wake up times are configured according to the following or upcoming multicast service sessions. The one or more wake up times may include for example fixed times each day or hour or minute, first wake up time and repetition period, or list of wake up times. The one or more wake up times may include one or more start times of multicast service sessions, one or more start and end times of multicast service sessions, one or more start times and periods of multicast service sessions.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

At least some embodiments of the present invention find industrial application in implementation of a power saving mode.

## Claims

1. A user equipment comprising:
- means for receiving (410), from an application function, a service announcement for a multicast broadcast service session, the service announcement including a multicast service session identifier of the multicast broadcast service session and one or more wake up times, wherein the one or more wake up times correspond to one or more multicast service session times, wherein the one or more multicast service session times are times that multicast data for the multicast broadcast service session is scheduled to be transmitted by the application function, and wherein respective wake up times of one or more wake up times indicate a time when the user equipment is to wake up and to start reception of multicast data for the multicast broadcast service session;
- means for waking up (420) the user equipment at respective wake up times of the one or more wake up times; and
- means for starting reception (425) of multicast data for the multicast broadcast service session after the means for waking up wakes up the user equipment at the respective wake up times.

2. The user equipment according to claim 1, comprising means for sending a session join request for the multicast broadcast service session, and wherein the means for receiving comprises means for receiving a reply to the session join request from the application function, the reply including the one or more wake up times.

3. The user equipment according to any of the claims 1 to 2, wherein the one or more wake up times include at least one of: fixed repeated times; a first time and a repetition frequency; fixed daily times; one or more start times; one or more start and end times; and one or more start times and periods.

4. The user equipment according to any of the claims 1 to 3, wherein the means for receiving comprises means for receiving multiple wake up times corresponding to multiple multicast service session times, and wherein the means for waking up comprises means for waking up the user equipment and starting reception of the multicast data at each of the wake up times corresponding to each of the multicast service session times.

5. An apparatus including an application function, the application function comprising
- means for providing (430), to one or more user equipment, a service announcement for a multicast broadcast service session, the service announcement including a multicast service session identifier of the multicast broadcast service session and one or more wakeup times, wherein the one or more wake up times correspond to one or more multicast service session times, wherein the multicast service session times are times that multicast data for the multicast broadcast service session is scheduled to be transmitted by the application function, and wherein respective wake up times of one or more wake up times indicate a time when a user equipment is to wake up and start reception of the multicast data for the multicast broadcast service session;
- means for transmitting (440) the service announcement for the multicast broadcast service session to the one or more user equipment; and
- means for transmitting (445), to the one or more user equipment, the multicast data for the multicast broadcast service session at the one or more multicast service session times corresponding to the one or more wakeup times.

6. A method of a user equipment, the method comprising:
- receiving (410), from an application function, a service announcement for multicast broadcast service session, the service announcement including a multicast service session identifier of the multicast broadcast service session and one or more wake up times, wherein the one or more wake up times correspond to one or more multicast service session times, wherein the one or more multicast service session times that multicast data for the multicast broadcast service session is scheduled to be transmitted by the application function, and wherein respective wake up times of one or more wake up times indicate a time when the user equipment is to wake up and start reception of multicast data for the multicast broadcast service session;
- waking up (420) the user equipment at respective wake up times of the one or more wake up times; and
- starting reception (425) of the multicast data for the multicast broadcast service session after waking up the user equipment at respective wake up times.

7. The method according to claim 6, further comprising sending a session join request for the multicast broadcast service session, and wherein the receiving comprises receiving, from the application function, a reply to the session join request, the reply including the one or more wake up times.

8. The method according to any of the claims 6 to 7, wherein the one or more wake up times include at least one of: fixed repeated times; a first time and a repetition frequency; fixed daily times; one or more start times; one or more start and end times; and one or more start times and periods.

9. The method according to any of the claims 6 to 8, wherein the means for receiving comprises means for receiving multiple wake up times corresponding to multiple multicast service session times, and wherein the means for waking up comprises means for waking up the user equipment and starting reception of the multicast data at each of the wake up times corresponding to each of the multicast service session times.

10. A method of an application function, the method comprising:
- providing (430), to one or more user equipment, a service announcement for a multicast broadcast service session, the service announcement including a multicast service session identifier of the multicast broadcast service session and one or more wakeup times, wherein the one or more wake up times correspond to one or more multicast service session times, wherein the multicast service session times are times that multicast data for the multicast broadcast service session is scheduled to be transmitted by the application function, and wherein respective wake up times of one or more wake up times indicate a time when a user equipment is to wake up and start reception of the multicast data for the multicast broadcast service session;
- transmitting (440), to the user equipment, the service announcement for the multicast broadcast service session to the one or more user equipment; and
- transmitting (445) the multicast data for the multicast broadcast service session at the one or more multicast service session times to the one or more user equipment

11. A computer program which, when run on a computer, cause a user equipment to perform the method of any of claims 6 to 8.

12. A computer readable medium comprising program instructions that, when executed by at least one processor, cause an apparatus to perform the method of any of claims 6 to 8.

## Patentansprüche

1. Benutzergerät, umfassend:
- Mittel zum Empfangen (410), von einer Anwendungsfunktion, einer Dienstankündigung für eine Multicast-Rundfunkdienstsitzung, wobei die Dienstankündigung eine Multicast-Dienstsitzungskennung der Multicast-Rundfunkdienstsitzung und eine oder mehrere Aufweckzeiten umfasst,
wobei die eine oder die mehreren Aufweckzeiten einer oder mehreren Multicast-Dienstsitzungszeiten entsprechen,
wobei die eine oder die mehreren Multicast-Dienstsitzungszeiten Zeiten sind, zu denen Multicast-Daten für die Multicast-Rundfunkdienstsitzung planmäßig durch die Anwendungsfunktion übertragen werden sollen,
und wobei jeweilige Aufweckzeiten der einen oder der mehreren Aufweckzeiten einen Zeitpunkt angeben, zu dem das Benutzergerät aufwachen und den Empfang von Multicast-Daten für die Multicast-Rundfunkdienstsitzung starten soll;
- Mittel zum Aufwecken (420) des Benutzergeräts zu den jeweiligen Aufweckzeiten der einen oder der mehreren Aufweckzeiten; und
- Mittel zum Starten des Empfangs (425) von Multicast-Daten für die Multicast-Rundfunkdienstsitzung, nachdem die Mittel zum Aufwecken das Benutzergerät zu den jeweiligen Aufweckzeiten aufgeweckt haben.

2. Benutzergerät nach Anspruch 1, umfassend Mittel zum Senden einer Sitzungsbeitrittsanfrage für die Multicast-Rundfunkdienstsitzung, und wobei die Mittel zum Empfangen Mittel zum Empfangen einer Antwort auf die Sitzungsbeitrittsanfrage von der Anwendungsfunktion umfassen, wobei die Antwort die eine oder die mehreren Aufweckzeiten umfasst.

3. Benutzergerät nach einem der Ansprüche 1 bis 2, wobei die eine oder die mehreren Aufweckzeiten mindestens eines der Folgenden umfassen: feste wiederholte Zeiten; eine erste Zeit und eine Wiederholungsfrequenz; feste tägliche Zeiten; eine oder mehrere Startzeiten; eine oder mehrere Start- und Endzeiten; und eine oder mehrere Startzeiten und Zeiträume.

4. Benutzergerät nach einem der Ansprüche 1 bis 3, wobei die Mittel zum Empfangen Mittel zum Empfangen mehrerer Aufweckzeiten umfassen, die mehreren Multicast-Dienstsitzungszeiten entsprechen, und wobei die Mittel zum Aufwecken Mittel zum Aufwecken des Benutzergeräts und zum Starten des Empfangs der Multicast-Daten zu jeder der Aufweckzeiten umfassen, die jeder der Multicast-Dienstsitzungszeiten entsprechen.

5. Vorrichtung, die eine Anwendungsfunktion umfasst, wobei die Anwendungsfunktion umfasst
- Mittel zum Bereitstellen (430), für ein oder mehrere Benutzergeräte, einer Dienstankündigung für eine Multicast-Rundfunkdienstsitzung, wobei die Dienstankündigung eine Multicast-Dienstsitzungskennung der Multicast-Rundfunkdienstsitzung und eine oder mehrere Aufweckzeiten umfasst,
wobei die eine oder die mehreren Aufweckzeiten einer oder mehreren Multicast-Dienstsitzungszeiten entsprechen,
wobei die Multicast-Dienstsitzungszeiten Zeiten sind, zu denen Multicast-Daten für die Multicast-Rundfunkdienstsitzung planmäßig durch die Anwendungsfunktion übertragen werden sollen,
und wobei jeweilige Aufweckzeiten der einen oder der mehreren Aufweckzeiten einen Zeitpunkt angeben, zu dem ein Benutzergerät aufwachen und den Empfang der Multicast-Daten für die Multicast-Rundfunkdienstsitzung starten soll;
- Mittel zum Übertragen (440) der Dienstankündigung für die Multicast-Rundfunkdienstsitzung an das eine oder die mehreren Benutzergeräte; und
- Mittel zum Übertragen (445), an das eine oder die mehreren Benutzergeräte, der Multicast-Daten für die Multicast-Rundfunkdienstsitzung zu der einen oder den mehreren Multicast-Dienstsitzungszeiten, die der einen oder den mehreren Aufweckzeiten entsprechen.

6. Verfahren eines Benutzergeräts, wobei das Verfahren umfasst:
- Empfangen (410), von einer Anwendungsfunktion, einer Dienstankündigung für eine Multicast-Rundfunkdienstsitzung, wobei die Dienstankündigung eine Multicast-Dienstsitzungskennung der Multicast-Rundfunkdienstsitzung und eine oder mehrere Aufweckzeiten umfasst,
wobei die eine oder die mehreren Aufweckzeiten einer oder mehreren Multicast-Dienstsitzungszeiten entsprechen,
wobei die eine oder die mehreren Multicast-Dienstsitzungszeiten Zeiten sind, zu denen Multicast-Daten für die Multicast-Rundfunkdienstsitzung planmäßig durch die Anwendungsfunktion übertragen werden sollen,
und wobei jeweilige Aufweckzeiten der einen oder der mehreren Aufweckzeiten einen Zeitpunkt angeben, zu dem das Benutzergerät aufwachen und den Empfang von Multicast-Daten für die Multicast-Rundfunkdienstsitzung starten soll;
- Aufwecken (420) des Benutzergeräts zu den jeweiligen Aufweckzeiten der einen oder der mehreren Aufweckzeiten; und
- Starten des Empfangs (425) von Multicast-Daten für die Multicast-Rundfunkdienstsitzung nach dem Aufwecken des Benutzergeräts zu den jeweiligen Aufweckzeiten.

7. Verfahren nach Anspruch 6, ferner umfassend das Senden einer Sitzungsbeitrittsanfrage für die Multicast-Rundfunkdienstsitzung, und wobei das Empfangen das Empfangen, von der Anwendungsfunktion, einer Antwort auf die Sitzungsbeitrittsanfrage umfasst, wobei die Antwort die eine oder die mehreren Aufweckzeiten umfasst.

8. Verfahren nach einem der Ansprüche 6 bis 7, wobei die eine oder die mehreren Aufweckzeiten mindestens eines der Folgenden umfassen: feste wiederholte Zeiten; eine erste Zeit und eine Wiederholungsfrequenz; feste tägliche Zeiten; eine oder mehrere Startzeiten; eine oder mehrere Start- und Endzeiten; und eine oder mehrere Startzeiten und Zeiträume.

9. Verfahren nach einem der Ansprüche 6 bis 8, wobei die Mittel zum Empfangen Mittel zum Empfangen mehrerer Aufweckzeiten umfassen, die mehreren Multicast-Dienstsitzungszeiten entsprechen, und wobei die Mittel zum Aufwecken Mittel zum Aufwecken des Benutzergeräts und zum Starten des Empfangs der Multicast-Daten zu jeder der Aufweckzeiten umfassen, die jeder der Multicast-Dienstsitzungszeiten entsprechen.

10. Verfahren einer Anwendungsfunktion, wobei das Verfahren umfasst:
- Bereitstellen (430), für ein oder mehrere Benutzergeräte, einer Dienstankündigung für eine Multicast-Rundfunkdienstsitzung, wobei die Dienstankündigung eine Multicast-Dienstsitzungskennung der Multicast-Rundfunkdienstsitzung und eine oder mehrere Aufweckzeiten umfasst, wobei die eine oder die mehreren Aufweckzeiten einer oder mehreren Multicast-Dienstsitzungszeiten entsprechen, wobei die Multicast-Dienstsitzungszeiten Zeiten sind, zu denen Multicast-Daten für die Multicast-Rundfunkdienstsitzung planmäßig durch die Anwendungsfunktion übertragen werden sollen, und wobei jeweilige Aufweckzeiten der einen oder der mehreren Aufweckzeiten einen Zeitpunkt angeben, zu dem ein Benutzergerät aufwachen und den Empfang der Multicast-Daten für die Multicast-Rundfunkdienstsitzung starten soll;
- Übertragen (440), an das Benutzergerät, der Dienstankündigung für die Multicast-Rundfunkdienstsitzung an das eine oder die mehreren Benutzergeräte; und
- Übertragen (445) der Multicast-Daten für die Multicast-Rundfunkdienstsitzung zu der einen oder den mehreren Multicast-Dienstsitzungszeiten an das eine oder die mehreren Benutzergeräte.

11. Computerprogramm, welches, wenn es auf einem Computer ausgeführt wird, ein Benutzergerät veranlasst, das Verfahren nach einem der Ansprüche 6 bis 8 auszuführen.

12. Computerlesbares Medium, umfassend Programmanweisungen, die, wenn sie von mindestens einem Prozessor ausgeführt werden, eine Vorrichtung veranlassen, das Verfahren nach einem der Ansprüche 6 bis 8 auszuführen.

## Revendications

1. Equipement d'utilisateur comprenant :
- des moyens de réception (410), en provenance d'une fonction d'application, d'une annonce de service pour une session de service de diffusion en multidiffusion, l'annonce de service incluant un identifiant de session de service de la session de service de diffusion en multidiffusion et un ou plusieurs temps de réveil,
dans lequel le ou les temps de réveil correspondent à un ou plusieurs temps de session de service de multidiffusion,
dans lequel le ou les temps de session de service de multidiffusion sont des temps auxquels des données de multidiffusion pour la session de service de diffusion en multidiffusion sont programmées pour être transmises par la fonction d'application,
et dans lequel des temps de réveil respectifs du ou des temps de réveil indiquent un instant auquel l'équipement d'utilisateur doit se réveiller et commencer la réception de données de multidiffusion pour la session de service de diffusion en multidiffusion ;
- des moyens de réveil (420) de l'équipement d'utilisateur aux temps de réveil respectifs du ou des temps de réveil ; et
- des moyens de démarrage de réception (425) de données de multidiffusion pour la session de service de diffusion en multidiffusion après que les moyens de réveil ont réveillé l'équipement d'utilisateur aux temps de réveil respectifs.

2. Equipement d'utilisateur selon la revendication 1, comprenant des moyens d'envoi d'une requête de jonction de session pour la session de service de diffusion en multidiffusion, et dans lequel les moyens de réception comprennent des moyens de réception d'une réponse à la requête de jonction de session en provenance de la fonction d'application, la réponse incluant le ou les temps de réveil.

3. Equipement d'utilisateur selon l'une quelconque des revendications 1 à 2, dans lequel le ou les temps de réveil incluent au moins l'un parmi : des temps répétés fixes ; un premier temps et une fréquence de répétition ; des temps quotidiens fixes ; un ou plusieurs temps de démarrage ; un ou plusieurs temps de démarrage et de fin ; et un ou plusieurs temps de démarrage et des périodes.

4. Equipement d'utilisateur selon l'une quelconque des revendications 1 à 3, dans lequel les moyens de réception comprennent des moyens de réception de multiples temps de réveil correspondant à de multiples temps de session de service de multidiffusion, et dans lequel les moyens de réveil comprennent des moyens de réveil de l'équipement d'utilisateur et de démarrage de réception des données de multidiffusion à chacun des temps de réveil correspondant à chacun des temps de session de service de multidiffusion.

5. Appareil incluant une fonction d'application, la fonction d'application comprenant
- des moyens de fourniture (430), à un ou plusieurs équipements d'utilisateur, d'une annonce de service pour une session de service de diffusion en multidiffusion, l'annonce de service incluant un identifiant de session de service de la session de service de diffusion en multidiffusion et un ou plusieurs temps de réveil,
dans lequel le ou les temps de réveil correspondent à un ou plusieurs temps de session de service de multidiffusion,
dans lequel les temps de session de service de multidiffusion sont des temps auxquels des données de multidiffusion pour la session de service de diffusion en multidiffusion sont programmées pour être transmises par la fonction d'application,
et dans lequel des temps de réveil respectifs du ou des temps de réveil indiquent un instant auquel un équipement d'utilisateur doit se réveiller et commencer la réception des données de multidiffusion pour la session de service de diffusion en multidiffusion ;
- des moyens de transmission (440) de l'annonce de service pour la session de service de diffusion en multidiffusion au ou aux équipements d'utilisateur ; et
- des moyens de transmission (445), au ou aux équipements d'utilisateur, des données de multidiffusion pour la session de service de diffusion en multidiffusion aux un ou plusieurs temps de session de service de multidiffusion correspondant au ou aux temps de réveil.

6. Procédé d'un équipement d'utilisateur, le procédé comprenant :
- la réception (410), en provenance d'une fonction d'application, d'une annonce de service pour une session de service de diffusion en multidiffusion, l'annonce de service incluant un identifiant de session de service de la session de service de diffusion en multidiffusion et un ou plusieurs temps de réveil,
dans lequel le ou les temps de réveil correspondent à un ou plusieurs temps de session de service de multidiffusion,
dans lequel le ou les temps de session de service de multidiffusion sont des temps auxquels des données de multidiffusion pour la session de service de diffusion en multidiffusion sont programmées pour être transmises par la fonction d'application,
et dans lequel des temps de réveil respectifs du ou des temps de réveil indiquent un instant auquel l'équipement d'utilisateur doit se réveiller et commencer la réception de données de multidiffusion pour la session de service de diffusion en multidiffusion ;
- le réveil (420) de l'équipement d'utilisateur aux temps de réveil respectifs du ou des temps de réveil ; et
- le démarrage de réception (425) de données de multidiffusion pour la session de service de diffusion en multidiffusion après le réveil de l'équipement d'utilisateur aux temps de réveil respectifs.

7. Procédé selon la revendication 6, comprenant en outre l'envoi d'une requête de jonction de session pour la session de service de diffusion en multidiffusion, et dans lequel la réception comprend la réception, en provenance de la fonction d'application, d'une réponse à la requête de jonction de session, la réponse incluant le ou les temps de réveil.

8. Procédé selon l'une quelconque des revendications 6 à 7, dans lequel le ou les temps de réveil incluent au moins l'un parmi : des temps répétés fixes ; un premier temps et une fréquence de répétition ; des temps quotidiens fixes ; un ou plusieurs temps de démarrage ; un ou plusieurs temps de démarrage et de fin ; et un ou plusieurs temps de démarrage et des périodes.

9. Procédé selon l'une quelconque des revendications 6 à 8, dans lequel les moyens de réception comprennent des moyens de réception de multiples temps de réveil correspondant à de multiples temps de session de service de multidiffusion, et dans lequel les moyens de réveil comprennent des moyens de réveil de l'équipement d'utilisateur et de démarrage de réception des données de multidiffusion à chacun des temps de réveil correspondant à chacun des temps de session de service de multidiffusion.

10. Procédé d'une fonction d'application, le procédé comprenant :
- la fourniture (430), à un ou plusieurs équipements d'utilisateur, d'une annonce de service pour une session de service de diffusion en multidiffusion, l'annonce de service incluant un identifiant de session de service de la session de service de diffusion en multidiffusion et un ou plusieurs temps de réveil, dans lequel le ou les temps de réveil correspondent à un ou plusieurs temps de session de service de multidiffusion, dans lequel les temps de session de service de multidiffusion sont des temps auxquels des données de multidiffusion pour la session de service de diffusion en multidiffusion sont programmées pour être transmises par la fonction d'application, et dans lequel des temps de réveil respectifs du ou des temps de réveil indiquent un instant auquel un équipement d'utilisateur doit se réveiller et commencer la réception des données de multidiffusion pour la session de service de diffusion en multidiffusion ;
- la transmission (440), à l'équipement d'utilisateur, de l'annonce de service pour la session de service de diffusion en multidiffusion au ou aux équipements d'utilisateur ; et
- la transmission (445) des données de multidiffusion pour la session de service de diffusion en multidiffusion aux un ou plusieurs temps de session de service de multidiffusion au ou aux équipements d'utilisateur.

11. Programme d'ordinateur qui, lorsqu'il est exécuté sur un ordinateur, cause un équipement d'utilisateur à exécuter le procédé selon l'une quelconque des revendications 6 à 8.

12. Support lisible par ordinateur comprenant des instructions de programme qui, lorsqu'elles sont exécutées par au moins un processeur, amènent un appareil à exécuter le procédé selon l'une quelconque des revendications 6 à 8.
